# EUROPEAN PATENT APPLICATION

(11) **EP 1 862 752 A1**
(43) Veröffentlichungstag der Anmeldung: **05.12.2007**
(21) Anmeldenummer: 05850657.7
(22) Anmeldetag: 07.11.2005
(51) Int. Cl.: F27B 1/22, F27D 11/02

(54) **KARBORUND-GLASIEROFEN MIT MEHREREN EBENEN UND ELEKTRISCHEM HEIZROHR**

(30) Priorität: 10.11.2004 CH 262592004
(71) Anmelder: Liu, Weihua, Jiuwangzhuang Nancai Kreis Shunyi-Distrikt, Beiiina VR 101300 (CN); Wustinger, Horst, 010020 Inneren Mongolei (CH)
(72) Erfinder: Liu, Weihua, Jiuwangzhuang Nancai Kreis Shunyi-Distrikt, Beiiina VR 101300 (CN); Wustinger, Horst, 010020 Inneren Mongolei (CH)
(86) Internationale Anmeldenummer: PCT/IB2005/003305
(87) Internationale Veröffentlichungsnummer: WO 2006/092654

(57) **Zusammenfassung**

Eine Art mehrteilig konstruierter elektrisch beheizter röhrenförmiger Karborund-Verglasungsofen. In der Ummantelung des Ofenmassivs befindet sich eine Isolierschicht, deren Besonderheit wie folgt ist: in der Isolierschicht verläuft ein Futterrohr, an dessen Außenwand sich eine Nut befindet, welche einen elektrischen Widerstand aufnimmt; in dem Futterrohr befindet sich ein ausgekleidetes Hohlrohr, zwischen dem Futterrohr und dem ausgekleideten Hohlrohr entsteht eine Wärmehöhle, und zwischen den Offenmassiven befindet sich eine Innenkupplung.

## Beschreibung

### Gebiet der Technik

Das vorliegende Gebrauchsmuster betrifft eine Art von Verglasungsofen, genauer betrifft es einen mehrteilig konstruierter elektrisch beheizten röhrenförmigen Karborund- Verglasungsofen.

### Bisheriger allgemeiner Stand der Technik

Bei einem traditionellen Verglasungsofen, wie ihn Abb. 1 zeigt, wird üblicherweise ein aus Ofenbausteinen gemauertes Ofenmassiv verwendet und die elektrischen Ofendrähte in die Ofenbausteine verlegt; sobald der elektrische Ofendraht unerbrochen ist, muss das gesamte Ziegehmassiv abgetragen und von neuem errichtet werden, was Arbeitskraft und Material verschwendet; da zudem an verschiedenen Stellen des Ofenmassivs der Wärmebedarf nicht gleich ist, muss die Struktur des Ofenmassivs auf die elektrischen Widerstandsdrähte abgestimmt werden, denn ist bei zwei benachbarten Widerstandsdrähten der Abstand etwas größer und besteht daher an der Abstandstelle eine kalte Zone, so kann das Material in der Ofenkammer nicht völlig gleichmässig aufgeheizt werden, die Expansion ist nicht gleichmässig, dadurch wird die Dichte des Materials relativ höher, und die Oberfläche wird nicht völlig geschlossen verglast, ein völlig verballtes Verglasungsresultat wird nicht erzielt, zudem ist der Energieverbrauch größer. Der Konstrukteur hatte zuvor bereits eine Art brunnenschachtförmigen Ofens konstruiert, wie ihn Abb. 2 zeigt, welcher anstatt der Widerstandsdrähte kreuzförmig angeordnete Siliziumkohlestäbe zum Heizen verwendete; im Falle eines Bruchs konnten die Siliziumkohlestäbe herausgezogen und ausgewechselt werden, wodurch das Problem des Durchschmelzens der Widerstandsdrähte gelöst wurde; jedoch bestand bei dieser Konstruktion die ungleichmässige Erwärmung des Ofenmassivs, das Entstehen von kalten Zonen und die schlechte Expansion weiterhin und das Verglasungsresultat war nicht ideal, zudem war der Energieverbrauch ziemlich hoch; darin lagen nun die zu lösenden Schwierigkeiten der Branche.

### Inhalt des Gebrauchsmusters

Ziel des vorliegenden Gebrauchsmusters ist es, eine Art von mehrteilig konstruiertem elektrisch beheiztem röhrenförmigem Karborund-Verglasungsofen anzubieten, dessen Konstruktion unter Verwendung eines in die Außenwand eines Karborundrohrs eingelassenen elektrischen Widerstandsbandes unter bester Ausnutzung der guten Wärmestrahlungseigenschaften von Siliziumkarbid ein röhrenförmiges hochwertiges Hochetemperatur-Strahlungsfutterrohr bildet, welches die oben angeführten Probleme effektiv löst.

Das Ziel des vorliegenden Gebrauchsmusters wird durch die folgend beschriebenen technischen Lösungen erreicht:
Eine Art mehrteilig konstruierter elektrisch beheizter röhrenförmiger Karborund-Verglasungsofen. In der Ummantelung des Ofenmassivs befindet sich eine Isolierschicht, deren Besonderheit wie folgt ist: in der Isolierschicht verläuft ein Futterrohr, an dessen Außenwand sich eine Nut befindet, welche einen elektrischen Widerstand aufnimmt; in dem Futterrohr befindet sich ein ausgekleidetes Hohlrohr, zwischen dem Futterrohr und dem ausgekleideten Hohlrohr entsteht eine Wärmchöhle, und zwischen den Ofenmassiven befindet sich eine Innenkupplung; die angeführte Nut entlang der Außenwand des Futterrohrs verläuft in U-förmiger Ringanordnung; zwischen der angeführten Nut und der Wärmehöhle befindet sich eine Strahlungsöffnung; das angerührte Futterrohr ist Karborund (Siliziumkarbid); das angeführte Ofenmassiv ist zusammengesetzt konstruiert und kann geöffnet werden; die angeführte Ummantelung besteht aus Metall.

Das gegenständliche Gebrauchsmuster weist folgende Vorteile auf:
1. Bei dem Gebrauchsmuster wird Karborund für das Futterrohr verwendet, in das ein gleichmässig ringförmig verlaufendes Widerstandsband eingelassen ist, sodass die guten Wärmestrahlungseigenschaften von Karborund bestens ausgenutzt werden und ein hochwertiges röhrenförmiges Hochtemperatur-Strahlungsfutterrohr entsteht, mit einer gleichmässigen Wärmeverteilung, mit einer beträchtlichen Steigerung der Wärmeeffizienz, und einer Verminderung des Energieverbrauchs. Zugleich wird dadurch das Expandieren des Materials nach der Wärmezufuhr gleichmässiger und die Dichte des Materials schön regelmässig, es kann ein völlig verballtes Verglasungsergebnis erreicht werden.
2. Bei dem Gebrauchsmuster ist zwischen den Ofenmassiven eine Innenkupplung installiert, dadurch wird das Problem der Kältezonen zwischen den Ofenmassiven effektiv gelöst, infolgedessen wird das Material überall gleichmässiger erwärmt.
3. Bei dem Gebrauchsmuster ist das Ofenmassiv zusammengesetzt konstruiert und kann geöffnet werden, es kann daher maschinell geformt, jederzeit auseinandergenommen und gewartet werden.

## Patentansprüche

1. Eine Art mehrteiliger konstruierter elektrisch beheizter röhrenförmiger Karborund-Verglasungsofen. In der Ummantelung des Ofenmassivs befindet sich eine Isolierschicht, deren Besonderheit wie folgt ist: in der Isolierschicht verläuft ein Futterrohr, an dessen Außenwand sich eine Nut befindet, welche einen elektrischen Widerstand aufnimmt; in dem Futterrohr befindet sich ein ausgekleidetes Hohlrohr, zwischen dem Futterrohr und dem ausgekleideten Hohlrohr entsteht eine Wärmehöhle, und zwischen den Offenmassiven befindet sich eine Innenkupplung.

2. Der in der Patentbeanspruchung unter I. beschriebene mehrteilig konstruierte elektrisch beheizte röhrenförmige Karborund-Verglasungsofen verfügt über folgendes Merkmal:
Die angeführte Nut entlang der Außenwand des Futterrohrs verläuft in
U-förmigerRinganrodnung.

3. Der in der Patentbeanspruchung unter 1. beschriebene mehrteilig konstruierte elektrisch beheizte röhrenförmige Karborund-Verglasungsofen verfügt über folgendes Merkmal:
Zwischen der angeführten Nut und der Wärmehöhle befindet sich eine Strahlungsöffnung.

4. Der in der Patentbeanspruchung unter 1. beschriebene mehrteilig konstruierte elektrisch beheizte röhrenförmige Karborund-Verglasungsofen verfügt über folgendes Merkmal:
Das angeführte Futterrohr ist Karborund (Siliciumkarbid).

5. Der in der Patentbeanspruchung unter 1. beschriebene mehrteilig konstruierte elektrisch beheizte röhrenförmige Karborund-Verglasungsofen verfügt über folgendes Merkmal:
Das angeführte Ofenmassiv ist zusammengesetzt konstruiert und kann geöffnet werden.

6. Der in der Patentbeanspruchung unter 1. beschriebene mehrteilig konstruierte elektrisch beheizte röhrenförmige Karborund-Verglasungsofen verfügt über folgendes Merkmal:
Die angeführte Ummantelung besteht aus Metall.
